# EUROPÄISCHE PATENTANMELDUNG

(11) **EP 0 561 047 A1**
(43) Veröffentlichungstag der Anmeldung: **22.09.1993**
(21) Anmeldenummer: 92119761.2
(22) Anmeldetag: 20.11.1992
(51) Int. Cl.: C25B 9/00

(54) **Elektrochemische Zellen zur Durchführung elektrochemischer Prozesse**

(30) Priorität: 04.03.1992 DE 4206843
(71) Anmelder: HERAEUS ELEKTROCHEMIE GMBH, D-63450 Hanau (DE)
(72) Erfinder: Heinke, Harri, W-6455 Erlensee (DE); Blatt, Wolfgang, Dr., W-6480 Wächtersbach (DE); Busse, Bernd, Dr., W-6100 Darmstadt (DE)

(57) **Zusammenfassung**

Eine elektrochemische Zelle zur Durchführung elektrochemischer Prozesse - beispielsweise Chromsäure-Regeneration oder elektrochemische Behandlung von Methansulfonsäure - weist mehrere plattenförmige Bipolar-Elektroden (4) auf, die durch Rahmen (2) im Abstand zueinander - zwischen jeweils zwei benachbarten Elektroden einen Elektrolytraum bildend - gehalten werden, wobei die Elektrolyträume im seitlichen und unteren Bereich flüssigkeitsdicht abgeschlossen sind und benachbarte Bipolar-Elektroden gegeneinander elektrisch isoliert sind; die Elektroden sind gegenüber den Rahmen mittels schlauchförmiger, durch Druckbeaufschlagung dehnbarer Dichtelemente (6), die jeweils in einer U-förmigen Nut (8) der Rahmen lagefixiert eingefügt sind, verspannt; die Zelle ist an der Flüssigkeitsoberfläche des Elektrolyten nicht abgedichtet, kann jedoch je nach Anwendung mit einer Abdeckung versehen werden. Zur Elektrodenentnahme wird die Verspannung durch Druckreduzierung im Inneren der Dichtelemente gelöst.

## Beschreibung

Die Erfindung betrifft eine elektrochemische Zelle zur Durchführung elektrochemischer Prozesse mittels ionenleitender Lösungen mit mehreren im wesentlichen plattenförmigen Elektroden, die durch Rahmen im Abstand zueinander, zwischen jeweils zwei benachbarten Elektroden einen Elektrolytraum bildend gehalten sind, wobei die Elektrolyträume wenigstens in ihrem seitlichen und unteren Bereich flüssigkeitsdicht abgeschlossen sind und benachbarte Elektroden gegeneinander elektrisch isoliert sind und wobei die Elektroden und die Rahmen lösbar gegeneinander verspannt sind.

Aus der DD-PS 141 463 ist eine Vorrichtung zur Durchführung elektrochemischer Prozesse bekannt, wobei eine nach dem Filterpressen-Prinzip aufgebaute geteilte Elektrolyse-Zelle mit parallel durchströmten Elektrodenkanälen beschrieben ist, und die mittels Membranen oder Diaphragmen gegeneinander abgeteilten Elektroden durch Dichtrahmen gegenseitig abgedichtet sind, die aus einem geeigneten flexiblen Material, wie z.B. PVC bestehen und beim Zusammenbau der Filterpressen-Anordnung abgedichtet werden. Neben monopolaren Elektroden sind auch bipolare Elektroden beispielsweise zur Chromsäure-Regeneration vorgesehen. Als problematisch erweist sich bei einer solchen Filterpressen-Vorrichtung der Austausch einzelner Elektroden, wobei zur Reinigung oder zum Austausch von Einzelelektroden bzw. Bipolarelektroden stets die gesamte Vorrichtung stillzulegen und zu demontieren ist.

Die Erfindung stellt sich die Aufgabe eine Vorrichtung zu schaffen, bei der die Elektroden ähnlich wie beim Filterpressen-Prinzip angeordnet sind, jedoch nicht durch einen auf alle Zellen gleichzeitig wirkenden Druck zusammengehalten werden, sondern aufgrund von Einzeldichtmaßnahmen unter Beibehaltung der übrigen Elektroden rasch auswechselbar sind; als Elektroden sollen sowohl monopolare als auch bipolare Elektroden zum Einsatz gelangen. Der Elektrolytraum soll dabei leicht zugänglich sein.
Die Aufgabe wird erfindungsgemäß durch die kennzeichnenden Merkmale des Anspruchs 1 gelöst.

Ein wesentlicher Vorteil ist in dem nach obenhin offenen Zellsystem zu sehen, so daß jederzeit durch Druckabfall des Dichtelements die benachbarte Elektrode bzw. Bipolarelektrode auf einfache Weise zu entnehmen und auszutauschen bzw. zu reinigen ist, während der Betrieb der übrigen Zellen gegebenenfalls unter Vornahme einer geringfügigen Korrektur der Zellenspannung weitergeht.

In einer vorteilhaften Ausgestaltung der Erfindung ist jedem Elektrodenrahmen auf wenigstens einer Seite ein schlauchförmiges Dichtelement zugeordnet. Die Dichtelemente dabei jeweils in einer Nut im Elektrodenrahmen fixiert.

Diese Anordnung hat den Vorteil, daß eine Elektrodenentnahme ohne Herausnahme des Dichtelements möglich ist, da dieses im Rahmen verbleibt; andererseits kann jedoch auch bei Beschädigung beispielsweise durch Korrosion das Dichtelement selbst auf einfache Weise aus der Nut entnommen und gegen ein neues Dichtelement ausgetauscht werden.

In einer weiteren vorteilhaften Ausgestaltung ist das U-förmig ausgebildete Dichtelement von einem ebenfalls U-förmig ausgebildeten Dichtelement umgeben, welches im Spalt zwischen zwei Elektrodenrahmen angeordnet ist; eine solche Vorrichtung hat den Vorteil, daß eine Vielzahl von einzelnen Elektrodenrahmen zu einem abgedichteten, blockartigen Gehäuse zuammengepreßt werden können, woraus sich ein einfacher dem Filterpressen-Priznzip ähnlicher Aufbau der Elektrodenrahmen ergibt. Dabei kann vorteilhafterweise auf einen Trog zur Aufnahme von Elektroden und Elektrodenrahmen verzichtet werden.

Weitere vorteilhafte Ausgestaltungen des Gegenstandes der Erfindung sind in den Unteransprüchen angegeben.

Als vorteilhaft erweist sich die Einsetzbarkeit des Systems für oxidative und reduktive elektrochemische Prozesse mit Bipolarelektroden, wobei aufgrund der oben offenen Konstruktion mittels Überlauf-Tropfen-Strecke ein elektrolytischer Kurzschluß zwischen den Zellen mit Sicherheit vermieden wird. Ein weiterer Vorteil ist darin zu sehen, daß die erfindungsgemäßen Dichtelemente auch zur Abdichtung von Ionenaustauscher-Membranen oder Diaphragmen verwendbar sind, sofern sich eine solche Zellenteilung aufgrund der Verwendung als erforderlich erweist.

Im Folgenden ist der Gegenstand der Erfindung anhand der Figuren 1, 2a, 2b, 2c und 3 näher erläutert.
Figur 1 zeigt in einer teilweise aufgebrochenen Explosionszeichnung das in einem Trog befindliche Zellengehäuse mit den zugehörigen Elektroden und Elektrodenrahmen vor dem Montagezustand.
Figur 2a zeigt in einer teilweise aufgebrochenen Draufsicht die Zelle mit den eingesetzten und gegenüber den Rahmen abgedichteten Elektroden;
Figur 2b zeigt einen Ausschnitt A gemäß der Figur 2a;
Figur 2c zeigt schematisch eine aus mehreren Elektroden und Elektrodenrahmen bestehende Zelle ohne Zellentrog.
Figur 3 zeigt im Ausschnitt eine Zelle mit im Zellentrog integrierten Elektrodenrahmen.

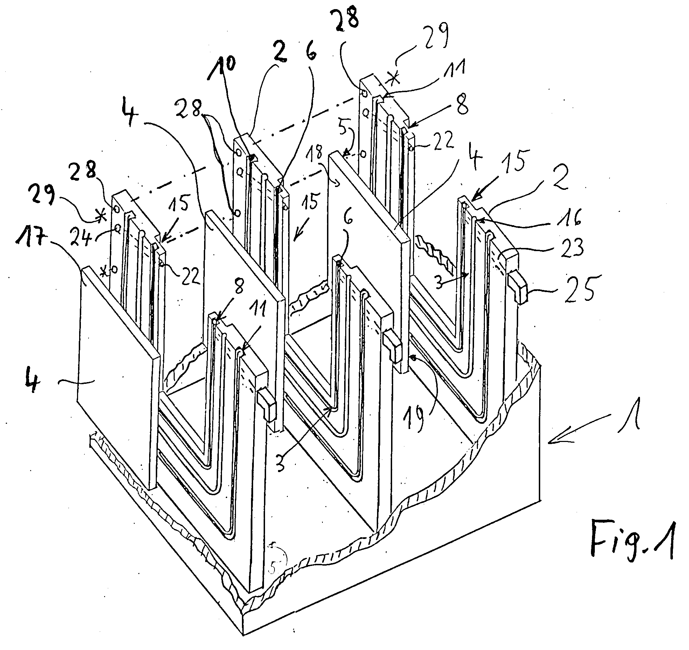

Gemäß Figur 1 befindet sich in dem als Auffangbehälter dienenden Zellentrog 1 eine Vielzahl von Elektrodenrahmen 2, zwischen denen bipolare Elektroden 4 angeordnet sind, welche im zusammengepreßten Zustand an der Dichtfläche 3 der Elektrodenrahmen 2 flüssigkeitsdicht anschließen. Die Dichtflächen 3 weisen eine U-förmig umlaufende Nut 8 auf, in welche ein schlauchförmiges Dichtelement 6 wenigstens teilweise eingebracht ist, wobei die exakte Positionierung der jeweiligen Elektrode 4 jeweils durch eine U-förmige Aussparung 15 auf der der Nut 8 abgewandten Seite des Elektrodenrahmens arretiert wird. Die Dichtflächen 3 an den Elektrodenrahmen 2 sind von ebenfalls U-förmig umlaufenden Nuten 11 umgeben, in welchen sich Dichtelemente 10 befinden, die den Zwischenraum zum jeweils benachbarten Elektrodenrahmen 2 abdichten. Zwischen den beiden U-förmig ausgebildeten Nuten 8,11 ist eine weitere U-förmig umlaufende Nut 16 vorgesehen, welche sich im Bereich der Dichtfläche 3 des Elektrodenrahmens 2 befindet und als Kontrollnut ausgebildet ist, um die Dichtigkeit im Bereich dieser Dichtfläche zu überprüfen und gegebenenfalls bei Flüssigkeitszutritt mittels eingebrachtem Sensor durch Alarmauslösung auf das entstehende Leck aufmerksam zu machen.

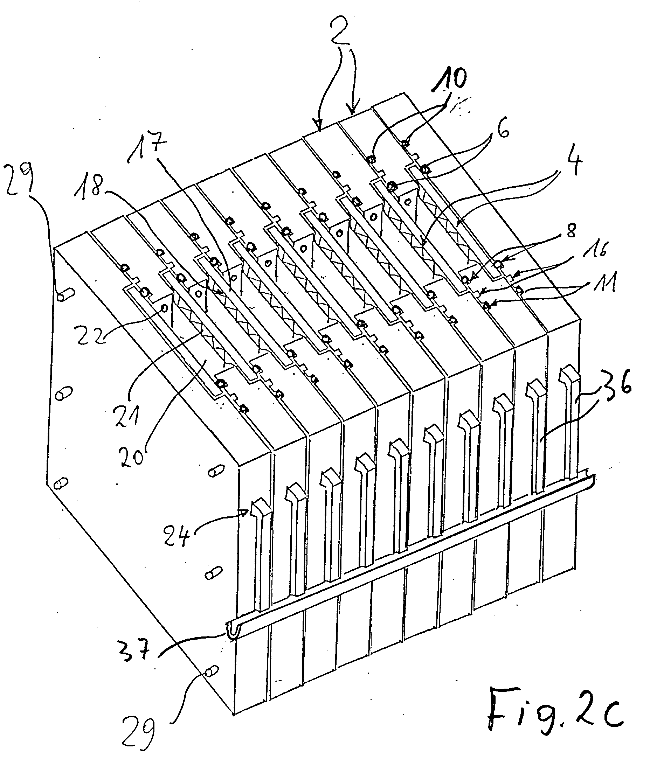

Die Elektrode 4 ist als bipolare Elektrode ausgebildet und besteht gemäß Figur 2a aus einem lösungsbeständigen elektrisch leitenden plattenförmigen Mittelstück 17 aus Oxidkeramik, welches auf der anodischen und der kathodischen Seite jeweils mit einer elektrisch leitenden Beschichtung für die elektrochemische Umsetzung beschichtet ist, wobei die kathodische Beschichtungsseite mit der Bezugsziffer 18 und die anodische Beschichtungsseite mit der Bezugsziffer 19 versehen sind.

Eine bipolare Elektrode 4 weist ein plattenförmiges Mittelteil aus elektrisch leitender Oxidkeramik auf Titanoxidbasis mit elektrokatalytischer Beschichtung auf, dessen Dicke 3mm beträgt und dessen Plattenkanten jeweils ca. 250mm lang sind. Sowohl auf der anodischen Seite 19, als auch auf der kathodischen Seite 18, ist das Mittelstück mit Platin beshichtet, wobei nach Figur 2a auf der kathodischen Seite ein lösungsbeständiger Abstandshalter 21 vorgesehen ist, welcher eine die kathodische Seite abdeckende Trennvorrichtung 20 entweder als Ionenaustauscher-Membran (z.B. für Chromsäure-Regeneration) oder ein Diaphragma (z.B. für elektrochemische Behandlung von Methansulfonsäure) im Abstand von ca. 3mm zur kathodischen Seite 18 hält. Die maximal zulässige Stromdichte auf der Elektrodenfläche liegt im Bereich von 0,1 bis 4KA/m². Die Elektrode 4 ist in dem auf die Dichtfläche 3 des Elektrodenrahmens 2 aufzubringenden Randbereich ebenfalls als Dichtfläche 5 ausgebildet, wobei in diesem Bereich die Trennvorrichtung 20 ohne Abstandshalter direkt auf der kathodischen Seite 18 aufliegt. Die anodische Seite 19 ist freiliegend gestaltet und weist keinerlei Membran oder Diaphragma auf.

Beim Betrieb der Zelle wird das Flüssigkeitsniveau der hier nicht dargestellten Lösung durch die Abflußöffnungen 22 gemäß Figur 1 im oberen Bereich der U-förmigen Ausnehmung 15 der Elektrodenrahmen 2 vorgegeben, wobei sich an jede Abflußöffnung 22 eine innerhalb des Elektrodenrahmens 2 geführte Gefällestrecke 23 mit einer Ausgangsöffnung 24 versehen ist, an die sich ein Rohr 25 zur Abfuhr der ausgetretenen Lösung in Zellentrog 1 anschließt. Dabei ist es möglich entweder - wie in Figur 1 gezeigt - beidseitig des U-förmigen Elektrodenrahmens eine solche Ablaufmöglichkeit vorzusehen, es ist jedoch auch möglich, nur auf einer Seite der Elektrodenrahmen Abflußöffnungen einzusetzen. Wesentlich ist dabei, daß zwischen der jeweiligen Abflußöffnung 22 und der Ausgangsöffnung 24 eine Gefällstrecke existiert und keine ionenleitende Kurzschlußbrücke zwischen zwei benachbarten Elektroden entstehen kann. In der Praxis handelte es sich um eine tropfenweise Abführung der Elektrolyt bzw. Anolyt-Lösung.

Zum Aufbau der Gesamtzelle werden die in Figur 1 dargestellten explosionsartig auseinander gezogenen Elemente der Zelle mittels der durch Öffnungen 28 in den Elektrodenrahmen geführten symbolisch dargestellten Schraubbolzen zusammengepreßt, wobei die Elektroden 4 jeweils mit ihrer anodischen Beschichtungsseite 19 gegen die U-förmig umlaufenden Dichtelemente 6 gepreßt werden und mit ihrer kathodischen Seite 18 in die U-förmigen Aussparungen 15 der Elektrodenrahmen 2 gepreßt werden. Die eigentliche Dichtfläche wird dabei zwischen den Dichtflächen 3 der Elektrodenrahmen und der Dichtflächen 5 durch Verschraubung der Bolzen 29 und Druckbeaufschlagung der Dichtelemente 6 gebildet. Die Druckbeaufschlagung kann beispielsweise an einseitig geschlossenen U-förmigen Dichtelementen 6 mittels Luftdruckkompressor erfolgen. Zur Entnahme einzelner Elektroden 4 ist es lediglich erforderlich, den Überdruck aus dem entsprechenden Dichtelement 6 abzulassen, wobei sich anschließend aufgrund der nicht mehr vorhandenen Spannung die Elektrode 4 durch einfaches Anheben herausziehen läßt. Auf diese Weise ist es möglich, selbst während des laufenden Zellenbetriebes einzelne Elektroden herauszunehmen und zu säubern, bzw. ganze Elektrodengruppen auszutauschen.

Figur 2a zeigt in der Draufsicht einen Ausschnitt aus der zusammengesetzten Zellenanordnung, wobei hier auf die Darstellung eines Troges verzichtet wurde, wie es in der Praxis auch möglich ist. Gemäß Figur 2a befinden sich die im Teilausschnitt dargestellten Elektroden 4 eingespannt im Elektrodenrahmen 2, wobei die Dichtelemente 6 mittels Druckbeaufschlagung sich ausdehnen und den Bereich zwischen der Nut 8 des Elektrodenrahmens 2 und der U-förmigen Randfläche der anodischen Beschichtungsseite 19 gas- und flüssigkeitsdicht abdichten. Auf der kathodischen Beschichtungsseite 18 ist der Zick-Zack-förmige Abstandshalter 21 erkennbar, welcher die Trennvorrichtung 20 gegenüber der kathodischen Seite 18 abstützt und somit einen Katolytraum bildet. Der zwischen anodischer Beschichtung 19 der Membran 20 liegende Bereich bildet den Anolytraum. Die Elektrodenrahmen 2 sind jeweils dicht aneinander gepreßt, wobei die Rahmen gegeneinander durch die U-förmigen zweiten Dichtelemente 10, welche in der zweiten Nut 11 verlaufen, gegeneinander abgedichtet sind. Lediglich der nach oben gerichtete Bereich der Zellen ist freiliegend, so daß jederzeit ein Zutritt zur Flüssigkeitsoberläche möglich ist. Als zusätzliche Dichtungsmaßnahmen sind die kathodenseitigen Flächen 18 der Elektroden 4 in der U-förmigen Aussparung 15 der Elektrodenrahmen 2 so gehaltert, daß sie gegen eine zusätzliche, ebenfalls U-förmig umlaufende Dichtung 31 gepreßt werden, der jedoch nur eine geringe Bedeutung zukommt, da Dichtigkeit allein schon durch Dichtelement 6 gewährleistet ist. Weiterhin ist in Figur 2b die als Kontrollnut dienende dritte Nut 16 erkennbar, in der sich ein Sensor 32 befindet, welcher bei Zutritt einer ionenleitenden Flüssigkeit mittels eines Alarmgebers 33 ein Fehlersignal ausgibt, um den Betreiber auf die Möglichkeit von Elektrolyt- bzw. Lösungsaustritt aufmerksam zu machen. Aufgrund der U-förmig abschließenden Dichtflächen ist es möglich, die Zelle auch ohne Zellentrog zu betreiben, wie dies anhand Figur 2c dargestellt ist. Insofern kommt dem aus Figur 1 bekannten Zellentrog lediglich eine Sicherungsfunktion gegen fehlerhaften Elektrolytaustritt sowie die Funktion als Auffangbassin für Elektrolyt-überlauf zu.

Weiterhin sind in Figur 2a im Aufbruch Abflußöffnung 22, Gefällestrecke 23 und Ausgangsöffnung 24 schematisch dargestellt, welche die Höhe des Lösungspegels in der Zelle, d.h. im Anolytbereich festlegen und die Bildung einer elektrolytischen Kurzschlußbrücke zwischen den Elektroden durch tropfenweisen Überlauf verhindern.

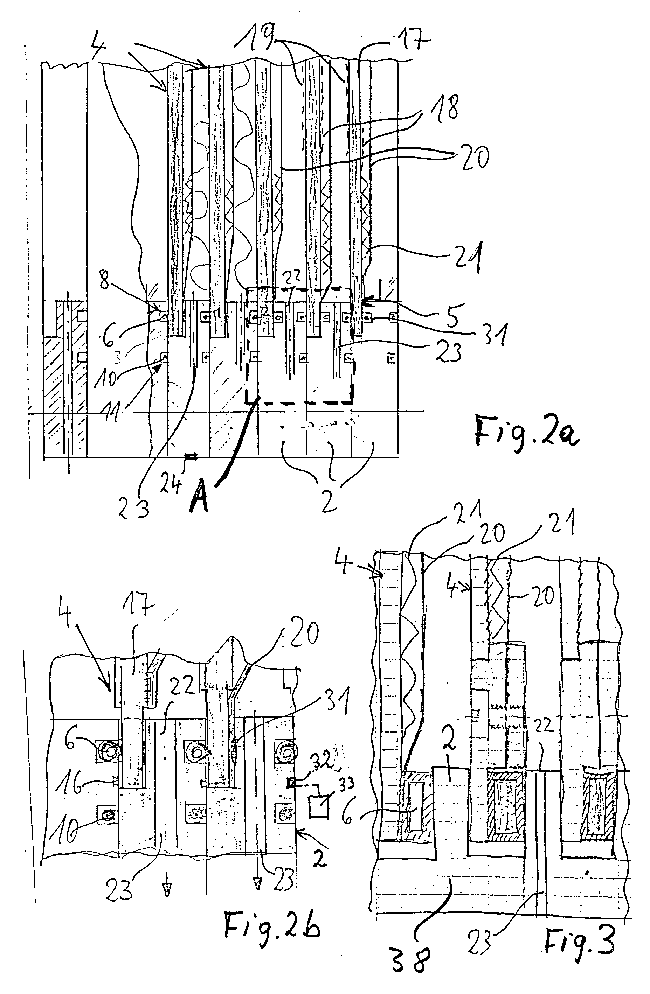

Gemäß Figur 2 c sind die Ausgangsöffnungen 24 jeweils mit einem unten offenen Ablaufrohr 36 verbunden, das die austretende Lösung zwecks Abtransport in eine darunter liegende U-förmige Sammelrinne 37 leitet.

Für die Anwendung der Zelle in der Chromsäure-Regeneration wird eine Ionenaustauscher-Membran eingesetzt, die den mit Chromsäure gefüllten Anolytraum gegen den mit Schwefelsäure gefüllten Katholytraum abtrennt. Bei der Anwendung als Oxidationszelle für Methansulfonsäure, wird zwischen Anode und Kathode ein Diaphragma eingesetzt.

Es ist weiterhin möglich, anstelle von Elektroden mit einem Träger aus Oxidkeramik auch Elektroden mit einem Träger aus lösungsbeständigem, elektrisch leitenden Kunststoff einzusetzen.

Die Elektrodenrahmen bestehen vorzugsweise aus lösungsbeständigem Kunststoff, wie PVDF oder PP, welcher eine maximale Betriebstemperatur von 140°C zuläßt. Das mit der Druckbeaufschlagung verbundene Dichtelement sowie die übrigen Dichtelemente bestehen vorzugsweise aus Silikon, es ist jedoch auch möglich Dichtelemente aus Polytetrafluoräthylen bzw. Viton einzusetzen. Dabei spielt die Elastizität eine wesentliche Rolle, um die Dichtigkeit bei Druckbeaufschlagung zu gewährleisten.

Figur 3 zeigt im Ausschnitt die Elektrodenrahmen 2 als integraler Bestandteil eines die Elektroden umfassenden Zellentroges 1, welcher ebenfalls nach obenhin freiliegend geöffnet ist. Die Elektrodenrahmen 2 werden dabei gemäß Figur 3 in Form von parallelen, im Abstand zueinander U-förmig umlaufenden Rippen an den Wänden 38 des Zellentroges 1 gebildet, wodurch der Abstand der Elektrodenrahmen fest vorgegeben ist und nicht mittels Schraubbolzen eingestellt zu werden braucht. Die Zusammenpressung bzw. Abdichtung der Elektroden erfolgt hier allein durch Druckbeaufschlagung der elastischen Dichtelemente.

Die Dichtelemente bestehen vorzugsweise aus einem Silikonschlauch, welcher eine Temperaturbeständigkeit bis zu 80°C aufweist.

Auch wenn die Flüssigkeitsoberfläche nach oben hin offen ist, kann hier je nach Anwendung eine gegebenenfalls mit Gasabführung versehene Abdeckung der Elektrolyt- bzw. Anolyt- und Katholyt-Räume vorgesehen werden.

## Patentansprüche

1. Elektrochemische Zelle zur Durchführung elektrochemischer Prozesse mittels ionenleitender Lösungen mit mehreren im wesentlichen plattenförmigen Elektroden, die durch Rahmen im Abstand zueinander, zwischen jeweils zwei benachbarten Elektroden einen Elektrolytraum bildend gehalten sind, wobei die Elektrolyträume wenigstens im seitlichen und unteren Bereich flüssigkeitsdicht abgeschlossen sind und benachbarte Elektroden gegeneinander elektrisch isoliert sind und wobei die Elektroden und die Rahmen lösbar gegeneinander verspannt sind, dadurch gekennzeichnet, daß zwischen mindestens einer Dichtfläche (3) eines Elektrodenrahmens (2) und der Dichtfläche (5) der diesem Rahmen zugeordneten Elektrode (4) ein schlauchförmiges, in seinem Querschnitt dehnbares Dichtelement (6) lagefixiert eingefügt ist, wobei die lösbare Verspannung durch die Querschnittsvergrößerung des Dichtelementes (6) mittels Druckbeaufschlagung erfolgt.

2. Zelle nach Anspruch 1, dadurch gekennzeichnet, daß jedem Elektrodenrahmen (2) auf wenigstens einer Seite ein schlauchförmiges Dichtelement (6) zugeordnet ist.

3. Zelle nach Anspruch 1 oder 2, dadurch gekennzeichnet, daß die Elektrodenrahmen (2) in dem Zellentrog (1) lagefixiert angeordnet sind.

4. Zelle nach einem der Ansprüche 1 bis 3, dadurch gekennzeichnet, daß die Rahmen (2) integraler Bestandteil des Zellentroges (1) sind.

5. Zelle nach Anspruch 4, dadurch gekennzeichnet, daß die Rahmen (2) durch parallel im Abstand zueinander umlaufende Rippen an den Wänden (38) des Zellentroges (1) gebildet sind.

6. Zelle nach einem der Ansprüche 1 bis 5, dadurch gekennzeichnet, daß die Dichtelemente (6) jeweils in einer Nut (8) lagefixiert sind.

7. Zelle nach einem der Ansprüche 1 bis 6, dadurch gekennzeichnet, daß die Nut (8) im Elektrodenrahmen (2) gebildet ist.

8. Zelle nach einem der Ansprüche 1 bis 7, dadurch gekennzeichnet, daß das schlauchförmige Dichtelement (6) einen Durchmesser im Bereich von 2 bis 6 mm aufweist, wobei der Innendurchmesser im Bereich von 1 bis 4 mm liegt.

9. Zelle nach einem der Ansprüche 1 bis 8, dadurch gekennzeichnet, daß das Dichtelement (6) mit einem Gasdruck im Bereich von 0,01 bis 10 bar beaufschlagt wird.

10. Zelle nach einem der vorhergehenden Ansprüche, dadurch gekennzeichnet, daß das Dichtelement in Richtung Zellentrogwand gesehen von einem weiteren Dichtelement (10) umgeben ist.

11. Vorrichtung nach einem der Ansprüche 1 bis 10, dadurch gekennzeichnet, daß sowohl die Dichtfläche (5) der Elektrode (4) als auch das Dichtelement (6) U-förmig ausgebildet sind.

12. Zelle nach einem der Ansprüche 1 bis 11, dadurch gekennzeichnet, daß das Innere des Dichtelementes (6) an einen Drucklufterzeuger anschließbar ist.

13. Zelle nach Anspruch 11, dadurch gekennzeichnet, daß der Elektrodenrahmen, oberhalb des u-förmigen Dichtelements eine von der zur Elektrode gerichteten Innen-Seite bis zur äußeren Seite reichende Durchlauföffnung für die Lösung aufweist.

14. Zelle nach einem der vorhergehenden Ansprüche, dadurch gekennzeichnet, daß die Elektroden als Bipolar-Elektroden ausgebildet sind.
